# EUROPEAN PATENT APPLICATION

(11) **EP 0 706 130 A1**
(43) Date of publication of application: **10.04.1996**
(21) Application number: 94480095.2
(22) Date of filing: 07.10.1994
(51) Int. Cl.: G06F 12/02

(54) **Contiguous memory allocation process**

(71) Applicant: International Business Machines Corporation, Armonk, N.Y. 10504 (US)
(72) Inventor: Brestenbach, Eric, F-06800 Cagnes Sur Mer (FR); Pham, Thanh, F-06600 Antibes (FR)
(74) Representative: Lattard, Nicole

(57) **Abstract**

An efficient memory management process for receiving data in contiguous memory areas, in a short and pre-determined time interval (specially in the context of interrupt routines), using small overhead associated with management information and offering high efficiency for error isolation and recovery. Said process optimizes the throughput of the data processing system by minimizing the processor execution time, fulfills interrupt latency requirements with pre-determined allocation and de-allocation processing time, optimizes the main storage usage by maximizing the free storage availability, and finally enhances recoverability with error isolation capability.

## Description

### Technical field

The present invention relates to memory management in data processing systems and more particularly to an efficient process for memory space allocation and deallocation for programmable communication adapters in high speed packet switching networks.

### Background art

Communication adapters are using memory to receive and process incoming data. Incoming data can be variable-length packets, from few bytes up to several thousand bytes. Transmission of real time data, like voice or video packets, which must be delivered to the receiver at a steady, uniform rate (isochronous mode) requires the use of short packets. On another side, pure data do not have any problem with transit delay. They are generated in a very bursty and non deterministic manner. The longer the packets are, the fewer packets per second must be switched for a given data throughput. In order to take full advantage of the different data packet transmission systems, the data transfer across the network must be done with packets of nearly the same size as the user packets without processing them into artificial lengths. As opposed to solely data networks or solely voice or video networks, the high speed network architectures have to support a plurality of heterogeneous transmission protocols operating with variable length packets.
Since the adapter processor tasks do not know the exact length of the packet that will arrive, they have to reserve a storage space of maximum size to be sure that the whole packet can be received. This requires a great amount of memory compared to the effective size of incoming data. An efficient process for memory allocation is indispensable for re-adjusting the allocated memory after reception of the data and for releasing the unused part of the memory.

The number of packets per second handled by a communication adapter may be greater than several thousand. Because the overall system throughput is directly related to the storage allocation and de-allocation processing time, an efficient dynamic storage management algorithm is required. Storage and processing unit efficiency are usually the result of trade-offs in the selection of said algorithm. Furthermore, the allocation and deallocation processing time must be pre-defined to insure no loss of data. Within the context of interrupts, the operation consisting in either reserving a working storage block, or releasing partially the unoccupied part of said block or returning an allocated working Storage block, must be deterministic, that means executed in a number of instructions determined in advance.

There have been many discussions of different types of dynamic storage allocation systems. Donald Knuth in *The Art of Computer Programming, Vol.1*: *Fundamental Algorithms, 2nd Edition, Addison Wesley Publishing Company*, *Inc., copyright 1973*, discusses a variety of memory management techniques. Knuth discusses linked list techniques where available free storage is linked by pointers from one available block to the next and various selection algorithms for determining which block to use in allocating to meet a storage request. Knuth also discusses the problem of returning a block to the free storage list and the need to collapse adjacent available areas together in order to compact memory and avoid fragmentation. The process of *garbage collection*, where an attempt is made to identify any unused allocated storage block and to combine them into the free storage list, is also covered.

Other techniques of memory management and garbage collection are known in the prior art.
Venton et al., *U.S. Pat. No. 4,121,286* discuss a system of memory space allocation and deallocation that employs a master capability table to track the use and allocation of storage. Venton et al. suggest a method of garbage collection relying on the use of garbage bits and visited bits to determine which storage blocks have been used by the system. The system must periodically inspect all storage blocks to determine whether some may be reclaimed as *garbage*.

McEntee et al., *U.S. Pat. No. 4,797,810* provide a system and method for incremental garbage collection in a virtual address space. McEntee et al. divide the memory into new and old and periodically copy objects from old to new portions of the memory and reclaim any unused space from the old space. This technique has the disadvantage of requiring substantially greater amounts of memory space than will be used by the processor.

Bozman et al. in *Analysis of Free-Storage Algorithms* - *Revisited* in the *IBM Systems Journal, Vol. 23, No. 1, 1984*, discuss a variety of free storage algorithm for use in the IBM VM/SP control program. Bozman et al. discuss a variety of methods which can be used to improve storage allocation efficiencies and to measure the relative performance of various methods. In particular, Bozman et al. discuss a dynamic storage algorithm employed with the IBM VM/370 product that uses fixed size queues containing free storage elements of particular size which can be rapidly allocated without searching. The fixed size queues allow the processor to immediately find a storage element of a given size without any requirement for searching a linked list. If the request cannot be satisfied from a queue, a search is made of the linked list of available storage blocks. Bozman et al. discuss the need for periodic garbage collection in which all of the free storage present in the fixed size queues is returned to the free list and the queues recreated. A major disadvantage of this present method is the requirement for periodic garbage collection by processing all entries in the queues.

Guenther et al., *U.S. Pat. No. 5,109,336* overcome the disadvantages of periodic garbage collection. Guenther et al. present a method to implement continuous garbage collection by means of a *spill address* and queues of fixed-size memory blocks. The spill address is adjusted to reflect the processor demand for memory blocks of a particular size. By periodically adjusting the spill address, the processor can adapt to changing patterns of data, memory block usage. Using fixed-size memory blocks, this method presents a disadvantage of requiring greater amounts of memory space than the one needed for storing incoming data and prevents the ability of piecemeal release.

### Summary of the invention

The present invention discloses a memory management process for data processing systems, particularly efficient in communication adapters. It provides:
- a Boundary Tags Data Structure,
- a support for partial release,
- a compaction algorithm, and
- an organization into Classes of memory.

It is an object of the present invention to control memory in a data processing system including one or more processing units and a memory, said data processing system executing one or a plurality of tasks, each task issuing one or more requests for memory of specified size, wherein a portion of said memory is designated working storage, the process comprising the steps of:
- defining, at initialization time, at least one class of free working storage blocks comprised within a given predefined size range,
- determining, at initialization time, a minimum size value bellow which no class of working storage blocks is defined,
- determining, in response to a request from a task for a memory space of a specific size, a non empty class of free working storage blocks with a content greater or equal to said requested size,
- allocating, a free working storage block from said class to said task, said allocating step determining a working storage block address,
- releasing partially unused memory part of said allocated working storage block on request of said task,
- deallocating said allocated working storage block when this is no longer required by said task,
- queueing all free working storage blocks within the same class in a double linked list.

It is another object of the present invention to bound the processing time of each basic function in order to satisfy the interrupt latency requirements.

It is another object of the present invention to provide continuous garbage collection to insure that Working Storage Blocks are reused as soon as they become available again.

It is another object of the present invention to classify Working Storage Blocks into sets called Classes of memory, each Class of memory containing Working Storage Blocks of a given size range.

It is another object of the present invention to provide a process for isolating a memory error and allowing error recovery.

### Description of the drawings

Figure 1 shows schematically the operation mode of a communication adapter.

Figure 2 shows the Boundary Tags Data Structure according to the present invention.

Figure 3 presents she working storage in its initial state according to the present invention.

Figure 4 shows the allocation of a Working Storage Block according to the present invention.

Figure 5 shows a Working Storage Block after its partial release according to the present invention.

Figure 6 shows a second Working Storage Block after its allocation according to the present invention.

Figure 7 shows a Working Storage Block after its deallocation according to the present invention.

Figure 8 and 9 show the effect of the allocation and deallocation processes on the working storage according to the present invention.

Figure 10 is an illustration of a working storage divided in two Classes according to the present invention.

Figure 11 is a flowchart showing the allocation process according to the present invention.

Figure 12 is a flowchart showing the piecemeal release process according to the present invention.

Figure 13 is a flowchart showing the deallocation process according to the present invention.

Figure 14 is a flowchart showing the Continuous Garbage Collection process according to the present invention.

Figure 15 is a flowchart showing the periodic Error Isolation and Recovery process according to the present invention.

### Description of the preferred embodiment of the invention

### Working Storage Structure

### High Throughput Communication Adapters

The process according to the present invention is of such a general nature that it can be used in a wide range of applications where memory management is essential to the performance of a system. This process is more particularly related to high-speed network nodes. A high-speed node is based upon the concept of loosely coupled communication adapters using a packet switch as the medium for processor-to-processor communication. The throughput of a communication adapter is defined as the total time required to handle a data packet from the input to the output. However, the packet size being application dependent, two measures are currently used to evaluate the performances of adapters :
- first, the number of packets of fixed length the adapter is able to handle in a second (packet throughput),
- second, the number of bits per second the adapter is able to transmit in case of infinite packet length (data throughput).

The performances depend on the hardware and on the processor capabilities but the main throughput limiting factor is the packet processing time and this processing time is directly related to the number of instructions required to handle a packet. The operations on the packets can be divided in two categories :
- the background process including for example the operations of packet routing, assembling - disassembling, formatting, bandwidth management, priority, ... This process is designed according to the adapter function, but in the same application, the background process is identical for all packets independently of their sizes.
- the memory management process within interrupt routines. This operation is generic for all adapter types. The processing time required for this operation is directly proportional to the packet length.

The interrupt routines are the way real time is supported by the processor. They must be as short as possible with a pre-defined set of instructions to avoid the overrun on the input device and the underrun on the output device. They command the performance of the adapter in term data throughput (bits per second). For packets of infinite length, the background process disappears and the throughput bottleneck is the interrupt response time which depends of the memory allocation and deallocation processes. In another way, to maximize the packet throughput (number of packets per seconds that the adapter is able to transmit), the number of instructions required by the background process must be reduced to a minimum.

### High Speed Memory Allocation

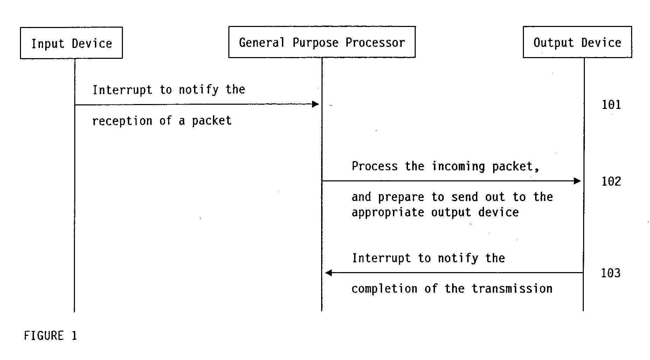

A *communication adapter* consists of one General Purpose Processor running a plurality of tasks which are continually demanding the allocation or the release of working storage. A communication adapter principally receives data packets from one attached input device, store them in a memory and determines their routing path and then forwards them to the appropriate output device(s). Dynamic storage allocation and deallocation are mainly done in the interrupt context to respectively prepare the reception of the next packet and re-use the memory previously allocated to a packet after its transmission. Figure 1 illustrates schematically this process :
- (101) The input device notifies asynchronously the General Purpose Processor by means of an interrupt that a data packet is ready to be processed. An interrupt routine is triggered for managing the memory space in order to allow the input device to receive the next packet.
- (102) The General Purpose Processor processes the packet, determines its route and then forwards it to the appropriate output device(s).
- (103) The output device notifies asynchronously the General Purpose Processor by means of an interrupt that the packet transfer is completed. An interrupt routine is triggered for recovering the memory previously allocated to said packet.

### Working Storage Blocks

When a communication adapter is initialized for the first time, a part of the memory is reserved for code, another part for static data and a last part is dedicated to the dynamic management of data and is designated as *working storage*. In a preferred embodiment, said working storage is defined as an integer number of 4 bytes words. For example, in a communication adapter, a typical working storage of 1 Mega bytes can be reserved for the dynamic allocation of memory.

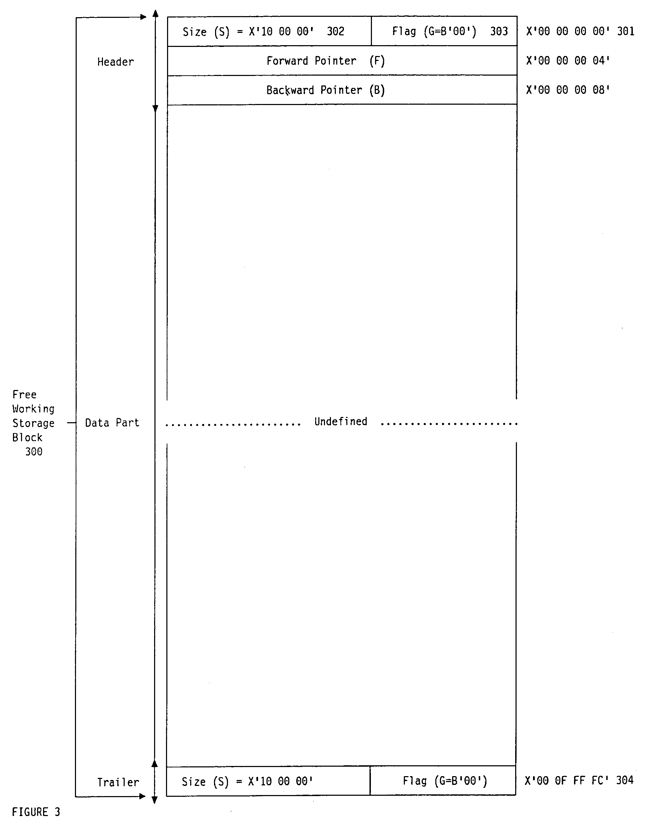

At initialization time, the entire working storage space (300) is available as shown in Figure 3. In our example, this space starts at address X'00 00 00 00' (301) and ends at address X'00 0F FF FC' (304) which represents a capacity of 1 Mega bytes.

*Note* : X'00 0F FF FC' is the address of the last 4 bytes word of the Working Storage Block. In all examples, addresses are given at word boundary.

The memory allocation process allocates, on request, memory space from the working storage area. Only the amount of storage needed for processing the user data is allocated to each task. A portion of storage, designated as *Working Storage Block*, of the appropriate size is extracted from the working storage and allocated to each task in response to their request. The unallocated portion of the working storage remains available to other tasks. Each time a task has completed a work, associated Working Storage Blocks are returned for reuse. In normal use , the working storage contains series of allocated and free blocks.

### Boundary Tags

### Header and Trailer

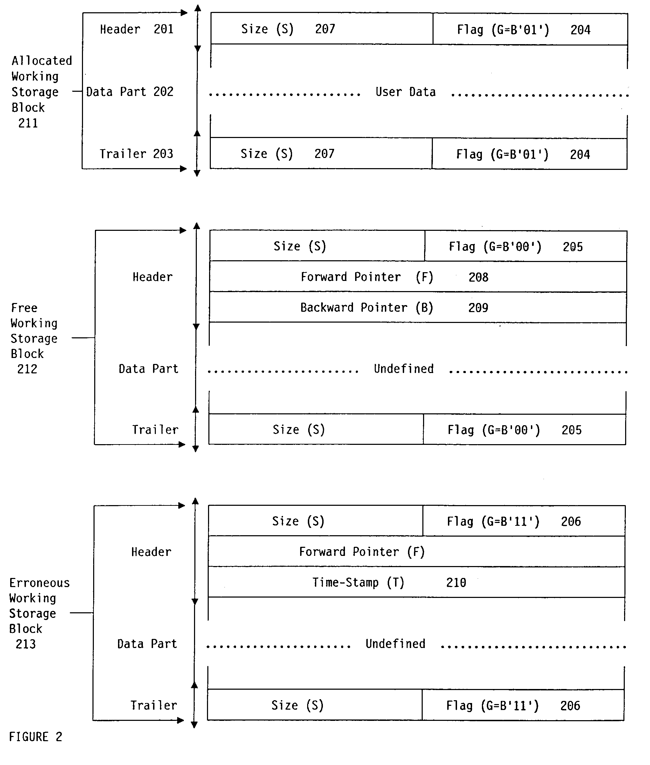

As shown in Figure 2, a Working Storage Block is divided in three parts :
- (201) a Header including, depending on the state of the Working Storage Block specified hereunder in brackets, :
   ■ (207) a Size field (S) (allocated)
   ■ (204) a Flag field (G) (allocated)
   ■ (208) a Forward Pointer (F) (free),
   ■ (209) a Backward Pointer (B)(free),
   ■ (210) a Time-Stamp field (T) (in error),
- (202) a Data Part, and
- (203) a Trailer including :
   ■ (207) a Size field (S),
   ■ (204) a Flag field (G).

Header and Trailer contain *Memory Management Information.*
Their Size (S) and Flag (G) fields are identical for each Working Storage Block. Inconsistent Size (S) and Flag (G) fields values between Header and Trailer show a loss of Memory Management Information resulting of an error. The Data Part occupies a continuous portion of memory between Header and Trailer. The contain of the data part is
- undefined when the Working Storage Block is free, and
- filled with user data when the Working Storage Block is allocated to a specific task.

### Size and Flag Fields

The preferred embodiment makes use of a *Boundary Tags Data Structure* to support the memory management functions as described by Donald Knuth in *The Art of Computer Programming*. This Boundary Tags Data Structure comprises :
- (207) a Size field (S)
- (204) a Flag field (G), and
at both ends of each Working Storage Block. This overhead is negligible when reasonable large Working Storage Blocks are used. For example, in a communication adapter where 80% of the packets sizes are in the range 200-500 bytes, the 8 bytes of the Boundary Tags represent less than 5% of an allocated Working Storage Block. In the preferred embodiment, the Flag field (G) is composed of two bits. It determines the state of each Working Storage Block :
- (205) Value G = B'00' means that the Working Storage Block is free.
- (204) Value G = B'01' means that the Working Storage Block is allocated.
- (206) Value G = B'11' means that the Working Storage Block is found in error.

The Size field (S) (207) is composed of 30 bits. It indicates the total length of the Working Storage Block (including the Memory Management Information - Header and Trailer).

*Note* : The Size fields (S) are identical at both ends of the Working Storage Block. This allows :
- the coherence of the Memory Management Information within a Working Storage Block.
- the determination of the address of both adjacent Working Storage Blocks :
   ■ The adjacent Working Storage Block at upper address is determined by adding the address of the Working Storage Block with the Size field (S) value in the Header.
   ■ The Trailer of the adjacent Working Storage Block at lower address is immediately contiguous to the Header of the Working Storage Block. The address can be obtained by subtracting the Size field (S) value of said Trailer from the address of the Working Storage Block.

As it will be described later, the use of the same Flag (G) and Size (S) fields in the Header and Trailer of each Working Storage Block is particularly useful in the Continuous Garbage Collection and the Error Isolation and Recovery processes.

### Forward and Backward Pointers

In prior arts, available Working Storage Blocks were typically managed as a linked list of addresses in memory (refer to *The Art of Computer Programming*, by Donald Knuth). A header record points to the first available storage block in working storage. The first available block has a pointer to the next available block. A linked list is developed with each available storage block pointing to the successive storage block, the last storage block containing an end of list indicator. To increase the processing efficiency, a double linked list is generally used whereas each available Working Storage Block points to the preceding available Working Storage Block as well as the succeeding available block. The double linked format speeds up the return of a block to the appropriate point in the list. In the preferred embodiment, available Working Storage Blocks are double linked. The Header of a free Working Storage Block contains two pointers :
- (208) a Forward (F) Pointer for pointing to the succeeding free Working Storage Block, and
- (209) a Backward (B) Pointer for pointing to the preceding free Working Storage Block.

### Time-Stamp field

The Time-Stamp field (T) is used in the Error Recovery process and will be described later.

### Classes of Memory

The major drawback to a dynamic storage allocation method based on a linked list of available storage locations is the amount of processor time required to find an available block. The search time may be considerable if the search starts at the beginning of the list and proceeds until an available block of the appropriate size is found. Because the block allocation occurs at the beginning of a free storage, the smaller storage fragments tend to be located at the beginning of the list. Each time storage is allocated, only the requested amount of storage is actually allocated. The excess available in the current block is broken off into a smaller fragment. All these small fragments tend to aggregate towards the front of the working storage list. Thus, the search for a large working storage block requires significant processing to step through all entries until the larger storage block sizes are reached.

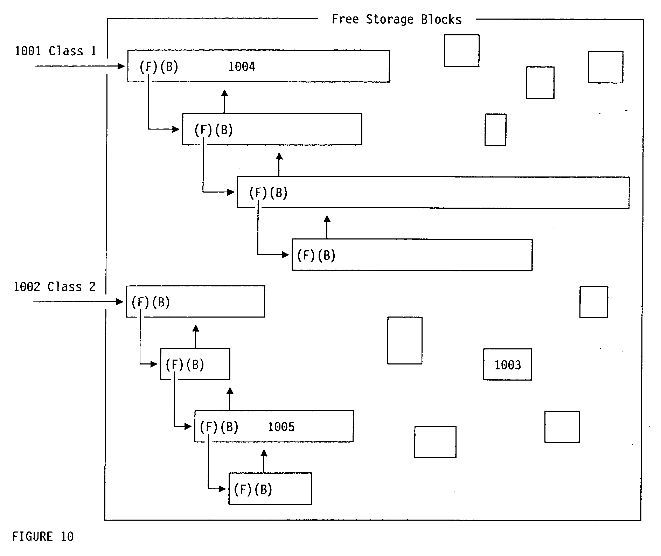

According to the present invention all available Working Storage Blocks are regrouped in a plurality of *classes*. A class is defined as a set of available Working Storage Blocks of different sizes within a given range. In a preferred embodiment, available Working Storage Blocks in a same class are double linked together using the Forward (F) and Backward (B) Pointers previously defined. Figure 10 is an illustration of a working storage with two classes. The first class (Class 1 (1001)) may contain different Working Storage Blocks (1004) with sizes greater than 2000 bytes. The second class, as for it, (Class 2 (1002)) may contain Working Storage Blocks (1005) in the range of 256-2000 bytes. When the processor receives a request for a size lower than 256 bytes, a single access to Class 2 returns the address of an available storage of at least 256 bytes. For a communication adapter which may receive packets with a maximum size of 2000 bytes, Class 1 (1001) provides an efficient support for a short and pre-determined allocation processing time. It is noted that free Storage Blocks of small sizes (1003) (less than 256 bytes in this example), are not integrated in a specific class until they are collapsed with adjacent free areas to build a larger Working Storage Block which will be able to be inserted into one of the predefined classes. The present invention can also operate in environments where more than two classes are defined.

### Piecemeal Release

An alternative to the linked list of the prior art is the use of queues of storage blocks of fixed size. Computer systems can be initialized with a given number of queues containing memory blocks of a given size. The IBM VM/SP system, as described in *IBM System Journal*, *Vol.23, No.1, 1984,* operates with a number of these queues. Their function is to find a free storage element immediately and thereby eliminating the requirement for searching a linked list. For example, when the processor receives a request for 100 bytes of working storage, a single access to the appropriate queue returns the address of the next available storage block of at least 100 bytes size. The disadvantages of this method is that storage blocks are allocated and deallocated as a whole block. Piecemeal release where a part of an allocated storage block needs to be returned to the free storage is not supported. From this prior art, results an inefficient use of storage particularly in the communication adapters area. This is because the processor tasks have to get a storage block of maximum size to be sure that the whole packet can be received. For example, due to a particular incoming data stream, 100 packets of 50 bytes are arriving to the communication adapter. If the maximum size of a packet is 2000 bytes, a processor must require 100 blocks of 2000 bytes during some period of time.

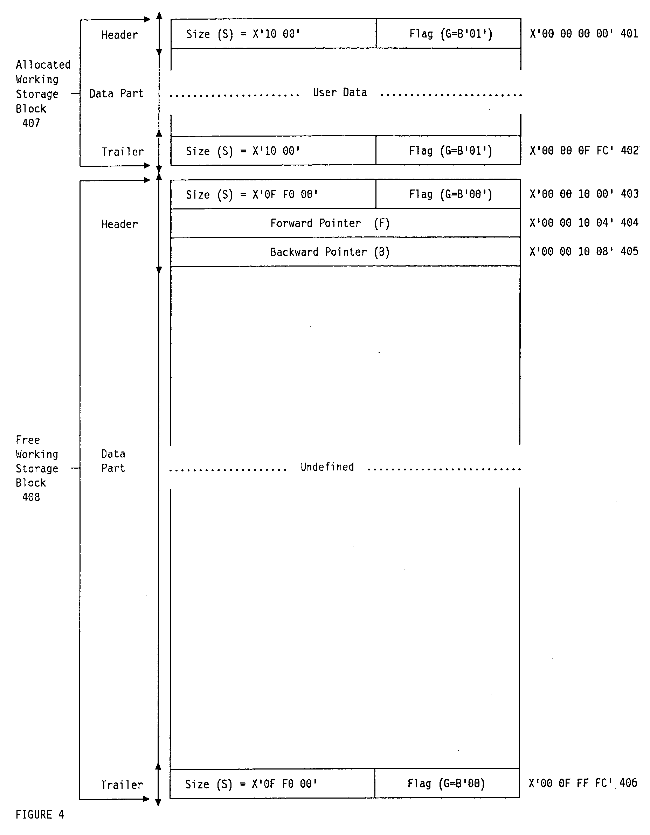

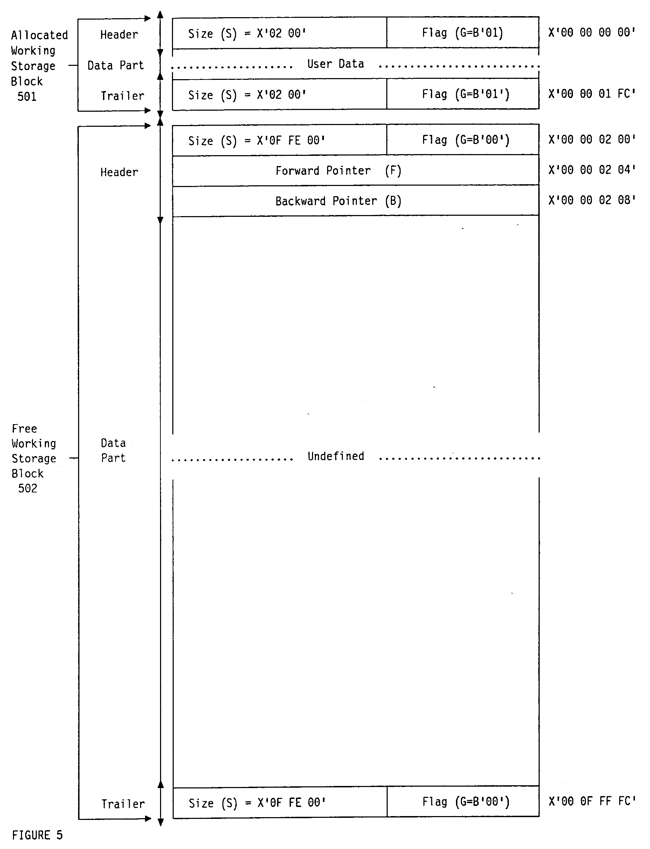

The present invention relates to a process that overcomes the limitations of the previously described method. In particular, the present invention implements a method for releasing the unused part of an allocated Working Storage Block. This operation consists in dividing said Working Storage Block into two fragments. The first fragment at lower address remains allocated to the processor task. The second at higher address is returned to the free storage. This technique to recover unused memory space Is known as *Piecemeal Release*. The Piecemeal Release process returns partially allocated Working Storage Blocks. The preferred embodiment, in the communication adapters area, operates effectively by recovering the higher address part. However, it can also be implemented so that both sides of a Working Storage Block can be recovered. Figure 5 illustrates a Working Storage Block after partial release. The allocated Working Storage Block (407) in Figure 4 is truncated and becomes smaller (allocated size X'00 02 00') as shown in Figure 5 (501). The unused part (size X'00 0E 00') is collapsed with the free Working Storage Block (size X'0F F0 00' (408) to build a new and larger free Storage Block (502) (size X'0F FE 00')

### Compaction Algorithm

There are several ways to manage the release of a previously allocated memory space. A first approach is to use a simple garbage collection mechanism. This policy consists :
- first, in simply doing nothing until space runs out,
- then, in searching for all the free areas, and
- finally, in fashioning a new list of free memory spaces.

However, The idea of a simple garbage collection is not recommended : it leaves memory more broken up than it should be and is slow when the memory is nearly full. Another option consists in performing periodically the garbage collection. In prior art versions of IBM VM/SP, garbage collection was performed at least every two minutes or whenever a user logged off the system thereby releasing blocks to working storage.

Another approach is to return blocks in the free memory list and to collapse adjacent available areas together, as soon as they become free. To this end, the memory management process use the Flag (G) and Size (S) fields located in the Header and Trailer of each Working Storage Block.
- The Flag field (G) of the adjacent Working Storage Blocks triggers the collapsing process by indicating the state of the data part ("allocated" or "free").
- The Size field (S) combined with the current pointer address of the given Working Storage Block allows to point on the next or previous Working Storage Block address.

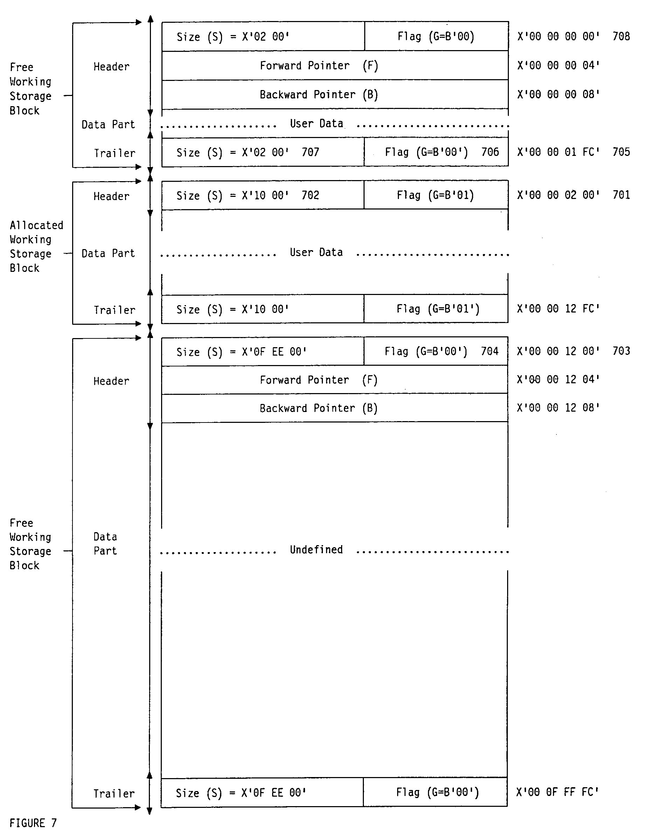

Figure 7 shows the memory address and Boundary Tags as they are used in the Continuous Garbage Collection process. An allocated Working Storage Block (709) stands between two adjacent free blocks (710 and 711). For example, if a task requests the deallocation of a Working Storage Block at address X'00 00 02 00' (701), the Continuous Garbage Collection process proceeds as follows :
1. the Size field (S) value X'00 00 10 00' in the Header (702) is used to determine the address of the next block (703). The addition of the Size (S) value X'00 00 10 00' with the current pointer address (X'00 00 02 00') determines the location of the next adjacent Working Storage Block X'00 00 12 00' (703). Within the Header of this said block, the Flag (G = B'00') field value (704) indicates that the block is free. So the compaction of the two blocks into a larger one can be executed. The new Storage Block has a size which is equal to the total of the two sizes X'00 0F FE 00', and is located at address X'00 00 02 00' (701).
2. Being immediately contiguous to the Header of the allocated Working Storage Block, the Trailer of the previous adjacent Working Storage Block X'00 00 01 FC' (705) is determined by subtracting one word (4 bytes) to the current pointer address X'00 00 02 00'. Within the Trailer, the Flag field value (G = B'00') (706) indicates that the block is also free. The Size (S) field value X'00 00 02 00' (707) allows to determine the address of the previous adjacent Storage Block X'00 00 00 00' (708) by subtracting this size from the current pointer address X'00 00 02 00' (701). The compaction of these Working Storage Blocks generates a new larger one located at address X'00 00 00 00' and with a size equal to X'00 10 00 00'.

During the step of collapsing the current Working Storage Block with a free one, the Continuous Garbage Collection process updates the Memory Management Information of the newly created free Working Storage Block to insert said block in the appropriate class. All available Working Storage Blocks are chained in a double linked-list, so that each block can be deleted at random whatever its location in the list.

### Error Isolation and Recovery

There are three types of Working Storage Block as shown in Figure 2. Each has a different Header (respectively Trailer) :
- (211) **Allocated Working Storage Block.**
   The user data is encapsulated by a Flag (G) and a Size (S) field at both ends.
- (212) **Free Working Storage Block.**
   The free Working Storage Block contains two pointers in addition of the Flag (G) and the Size (S) field : a Forward (F) and a Backward (B) Pointer. Free Working Storage Blocks are chained in a double linked-list, so that each Block can be deleted no matter where in the list.
- (213) **Erroneous Working Storage Block.**
   In addition to the Flag field (G) and Size field (S), the Header of a Working Storage Block found in error is completed with a Forward Pointer (F) and a Time-Stamp field (T). Erroneous Working Storage Blocks are simply chained into a queue periodically scanned by the Error Recovery process.

As an immediate consequence of the compaction algorithm described above, the structure of the working storage is composed with a mix of allocated and free Working Storage Blocks. The integrity of the working storage can be checked at any time by scanning in sequence the Working Storage Blocks from the beginning to the end of the working storage. The Header and Trailer of any Working Storage Block must contain consistent Flag (G) and Size (S) fields. The scanning process allows the detection of any error resulting of the modification of the Memory Management Information. The Boundary Tags Data Structure has the property to allow to a scanning in the reverse order, from the end to the beginning of the working storage. This property is essential to isolate a memory error and to encapsulate, as an erroneous Working Storage Block, the portion of memory where losses of Memory Management Information have been detected. In prior arts, such memory errors are generally fatal to the memory management process. They are leading to the reset of the whole working storage. In the present invention, only erroneous Working Storage Blocks have to be recovered. It can be done immediately or after a predetermined interval of time in order to allow the processor tasks to be informed of the occurrence of the error. The Time-Stamp field (T) is used for recording the time associated to the discovery of an error in a Working Storage Block. Periodically, the process determines whether it is the appropriate moment to recover the erroneous Working Storage Block.

### Contiguous Memory Allocation Process

The dynamic storage allocation process comprises five primary functions :
1. the allocation of a Working Storage Block
2. the partial release of a Working Storage Block
3. the deallocation of a Working Storage Block
4. the continuous garbage collection
5. the periodic error isolation and recovery

This process is supported by a Boundary Tags Data Structure, a plurality of classes of Working Storage Blocks and a number of control variables including the Forward (F) and Backward (B) Pointers, the Time-Stamp field (T) and the address of the first available Working Storage Block of each class. In a preferred embodiment, two classes of Working Storage Blocks are defined. When the system is initialized, the whole working storage is available and is placed in Class 1 as a single free Working Storage Block. Class 2 is initialized but is empty. Figure 3 illustrates this unique Working Storage Block (300) at initialization time. The portion of memory from address X'00 00 00' (301) to address X'0F FF FC' (304) comprises:
- (303) A Flag field (G) of two 2 bits length with value B'00' meaning that the Working Storage Block is free.
- (302) A Size field (S) of 30 bits length with value X'00 10 00 00' indicating the total size (1 Mega bytes) of this unique Working Storage Block.
- A Forward Pointer (F) and Backward Pointer (B), 4 bytes length each, both with a value equal to zero meaning that no other Working Storage Block is chained.

*Note* : All fields lengths and memory addresses are given as example and are not intended to limit the subject matter of the present invention.

Figure 4 illustrates the allocation process of a Working Storage Block. The newly defined Working Storage Block (407) is located between address X'00 00 00 00' (401) at the beginning of the free Working Storage Block initially defined and address X'00 00 0F FC' (402) according to its size X'10 00'. The preferred embodiment allocates working storage in ascending order from the lowest available memory address. Other systems, however, may allocate working storage from the highest address towards lower addresses. The present invention is able to operate in both environments. For example, after initialization, a processor task, in a communication adapter, requests a Working Storage Block of maximum buffer size, let's say 4088 bytes, for preparing the reception of a first packet. There are now two Working Storage Blocks :
1. (407) The one at lowest address is allocated to the application task. The Flag field (G) at both ends is marked with value B'01' (Allocated Working Storage Block). The Size field (S) at both ends indicates the total length of the Working Storage Block, including the 8-bytes of Memory reserved for Memory Management Information (value X'10 00' = 4096 bytes).
2. (408) The one at upper address is a free Working Storage Block. Its size is modified from value X'10 00 00' to value X'0F F0 00' which represents a reduction of 4096 bytes.

An interrupt is raised to indicate both
- the reception of a packet, and
- the length of this packet.

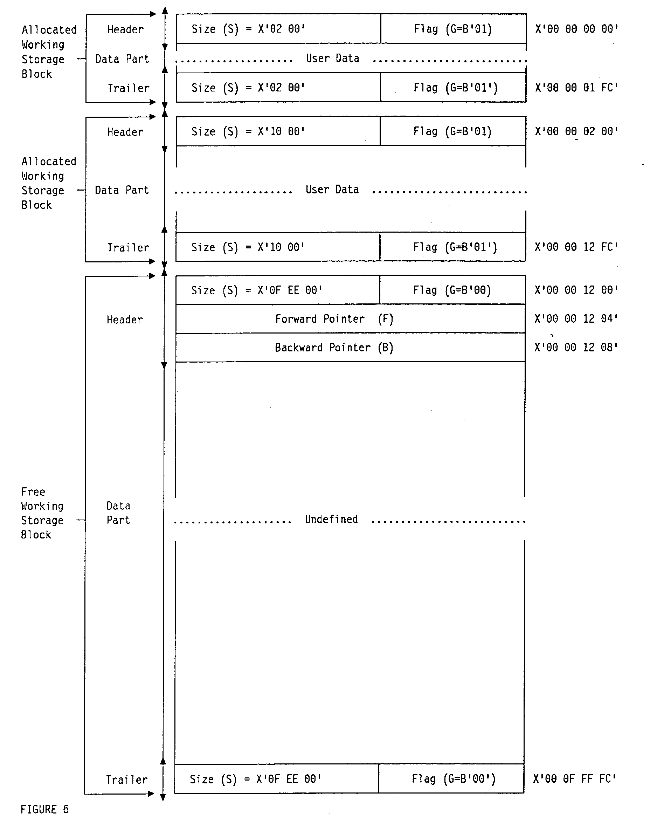

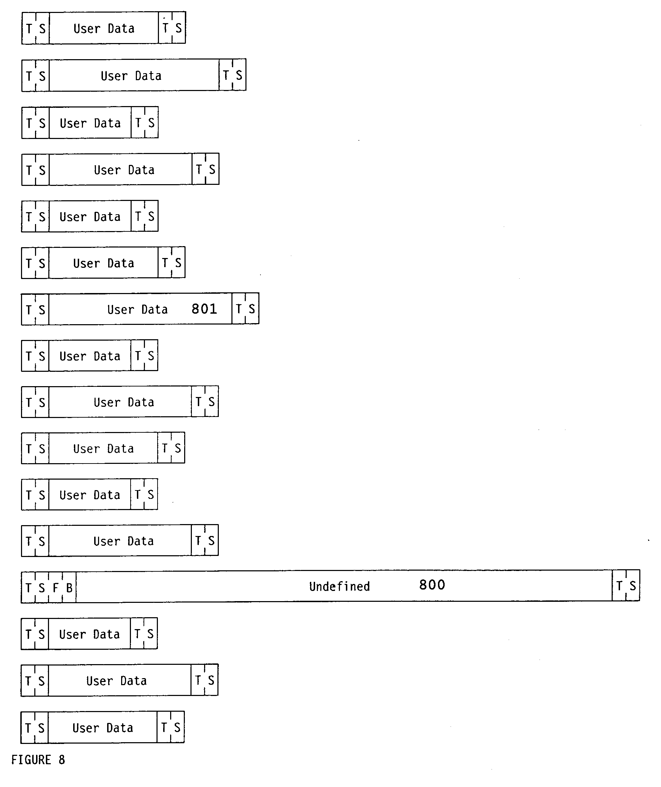

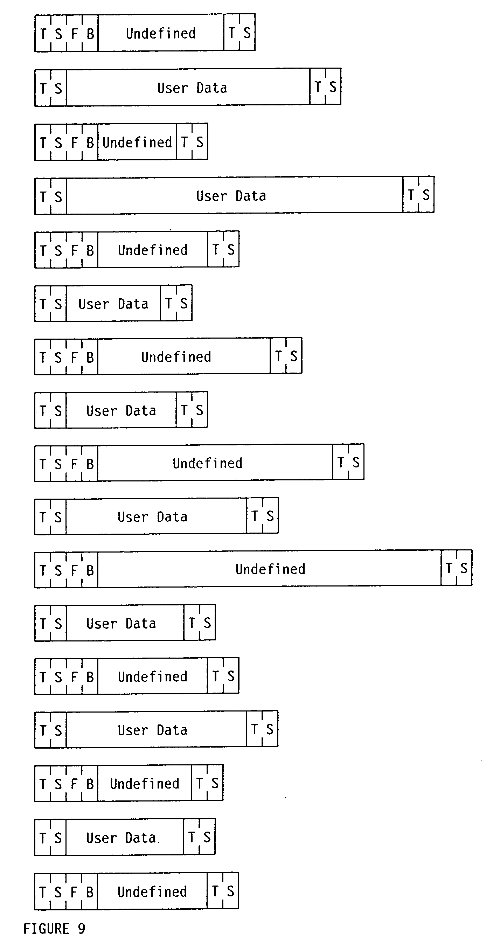

The interrupt task releases the unused memory part and requests another Working Storage Block of maximum size buffer to prepare the reception of the next packet as shown in Figures 5 and 6. A task receives the incoming packet, determines the output device, and then prepares to send out the packet. Later, an interrupt is raised to indicate the completion of the packet transmission. The Working Storage Block is returned to the free storage (Figure 7). And so on. Figure 8 and Figure 9 illustrate the effects of the allocation and deallocation steps. Each Working Storage Block is allocated in ascending order from the lowest memory address towards the highest address at the other extremity of the working storage. The structure of the working storage consists of allocated and free Working Storage Blocks each interlaced. The result of an optimal usage of the memory is to obtain N allocated (801) and only one free Working Storage Block (800) as represented in Figure 8. In the worst case, the memory is fragmented in N allocated and N + 1 free Working Storage Block as represented in Figure 9.

### Allocation of a Working Storage Block

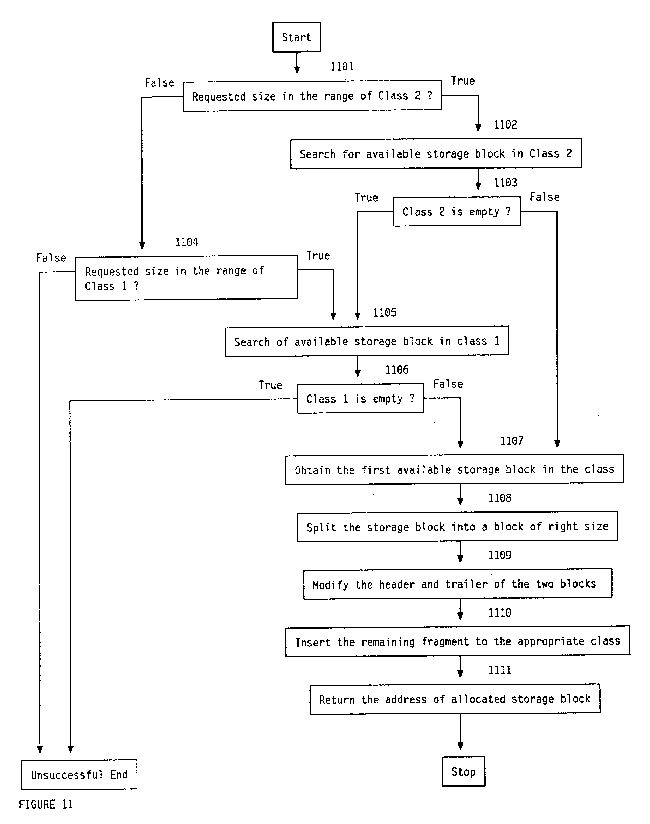

Figure 11 is a flowchart describing the allocation process for obtaining a Working Storage Block according to the present invention.
- (1101) The processor task generates a request to have a Working Storage Block of a given size. An attempt is made to obtain a free Working Storage Block in the appropriate class, that means in the class corresponding to the size of the requested Working Storage Block. In our example, the size is first compared with the range value of Class 2. Free Working Storage Blocks being smaller in Class 2 than in Class 1, this allows to preserve large available Working Storage Blocks for further requests.
- (1104) If the requested size is greater than the maximum size defined for this first selected class (Class 2) the next upper class (Class 1) is used for comparison.
- (1102 - 1105) If the requested size fits in the range defined for the current selected class (Class 2 or 1), then the allocation process searches for an available Working Storage Block in this class.
- (1103 - 1106) The dynamic storage allocation process determines whether the selected class is empty or not. If it is empty (contains no Working Storage Block), the process returns an unsuccessful search condition.
- (1107) If the class is not empty, the first Working Storage Block from the list of available Working Storage Blocks in this class is removed and used to satisfy the temporary storage request. This process comprises the steps of:
   ■ (1108) splitting the free Working Storage Block in two parts :
      ▲ the first part corresponding to the Working Storage Block of the requested size,
      ▲ the second part remaining available.
   ■ (1109) updating Header and Trailer of both Working Storage Blocks with their new state ("allocated" or "free") and size,
   ■ (1110) inserting in the appropriate class the Working Storage Block which remains available,
   ■ (1111) returning to the task the address of the newly allocated Working Storage Block.
- (1105) If the allocation of a Working Storage Block in a class is unsuccessful, an attempt is made to allocate a block from another class with larger Working Storage Blocks. In the preferred embodiment, if the allocation in Class 2 is unsuccessful, an attempt is made to obtain a block from the Class 1.
- (1106) If the allocation of a Working Storage Block in Class 1 fails, the allocation process ends as being unsuccessful.

### Partial Release of a Working Storage Block

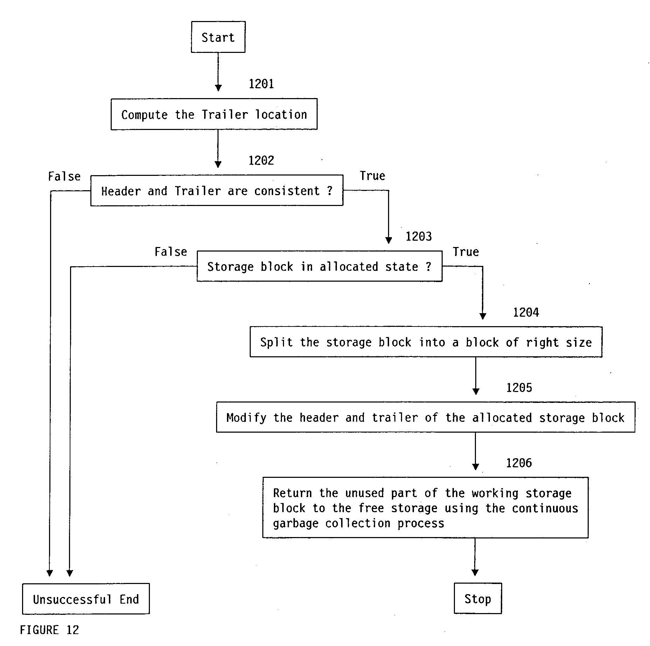

Figure 12 is a flowchart describing the piecemeal release. The processor task generates a request for releasing the unused part of a previously allocated Working Storage Block. It gives the location of the Working Storage Block and the real size of the user data which must remain allocated.
- (1201) Flag (G) and Size (S) fields at both ends of the Working Storage Block are first examined. The Size field (S) in the Header combined with the address previously given by the task is used to compute the Trailer location.
- (1202) The piecemeal release validates that both Header and Trailer contain the same values. If they are different, the piecemeal release process terminates as being unsuccessful.
- (1203) The Flag field (G) is checked. Its value must be equal to B'01' indicating that the Working Storage Block is in an 'allocated' state. If the state is valid, the request is fulfilled by :
   ■ (1204) adjusting the allocated Working Storage Block to the requested size and
   ■ (1205) updating the Size field (S) in the Header and Trailer with the new size of the Working Storage Block.
   ■ (1206) returning the remaining memory part to the free working storage using the Continuous Garbage Collection process.

### Deallocation of a Working Storage Block

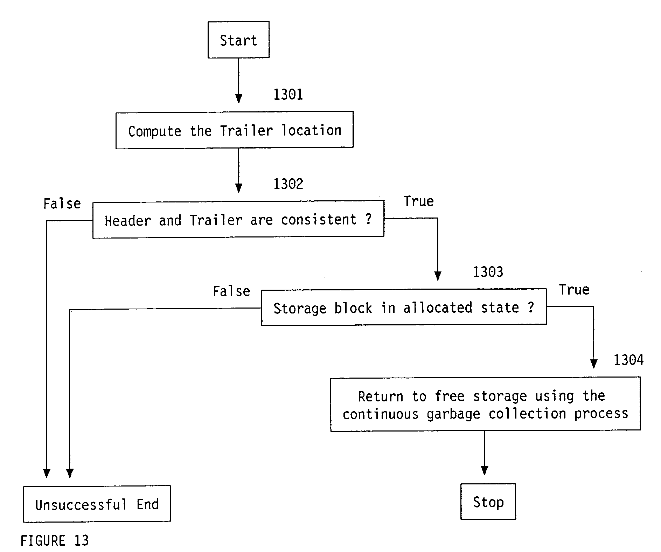

Figure 13 is a flowchart of the deallocation process used for returning a block to the free storage. When a task requests a deallocation of a Storage Block, it gives the location of the block to be returned.
- (1301) Flag (G) and Size (S) fields at both ends of the Working Storage Block are first examined. The Size field (S) in the Header combined with the address previously given by the task is used to compute the Trailer location.
- (1302) The deallocation process checks that both Header and Trailer contain the same value. If they are different, the deallocation process terminates as being unsuccessful.
- (1303) The Flag (G) field is checked. Its value must be equal to B'01' indicating that the Working Storage Block is in an 'allocated' state.
- (1304) If the Storage Block is in a valid state, it is returned to the free storage using the Continuous Garbage Collection process.

### Continuous Garbage Collection

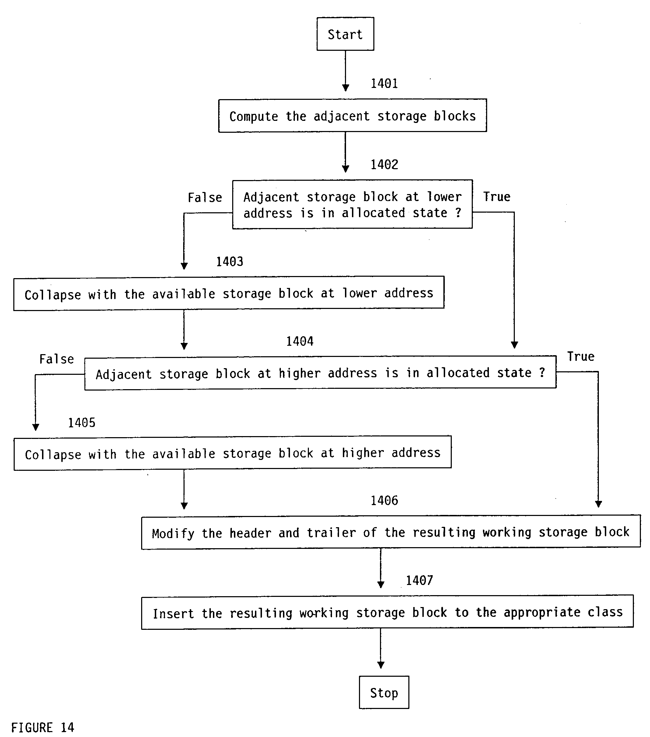

Figure 14 is a flowchart of the Continuous Garbage Collection process used to collapse adjacent free Working Storage Blocks.
- The Continuous Garbage Collection process receives the address of a Working Storage Block from the deallocation (1304), Error Isolation and Recovery (1509), partial release (1206) processes ... By means of said address, it computes the two adjacent Working Storage Blocks (1401), one at the lower address and the other at the upper address. The Trailer of the Working Storage Block at lower address is immediately contiguous to the Header of the Working Storage Block. The Header of the Working Storage Block at upper address is determined by adding the address with the size of the Working Storage Block.
- (1402) The continuous garbage collection process uses the value of the Flag field (G) in the Trailer to determine whether the Working Storage Block at lower address is available or not.
- (1403) If the Working Storage Block is available, then the two blocks are collapsed into a larger one.
- (1404) The next stage of the process consists in determining the state of the working storage at upper address :
   ■ (1405) If this is available, then the two blocks are collapsed into a larger one.
- (1406) The Header and Trailer of the resulting available Working Storage Block are updated according to the new size and state.
- (1407) Then the block is inserted in the appropriate class.

### Error Isolation and Recovery

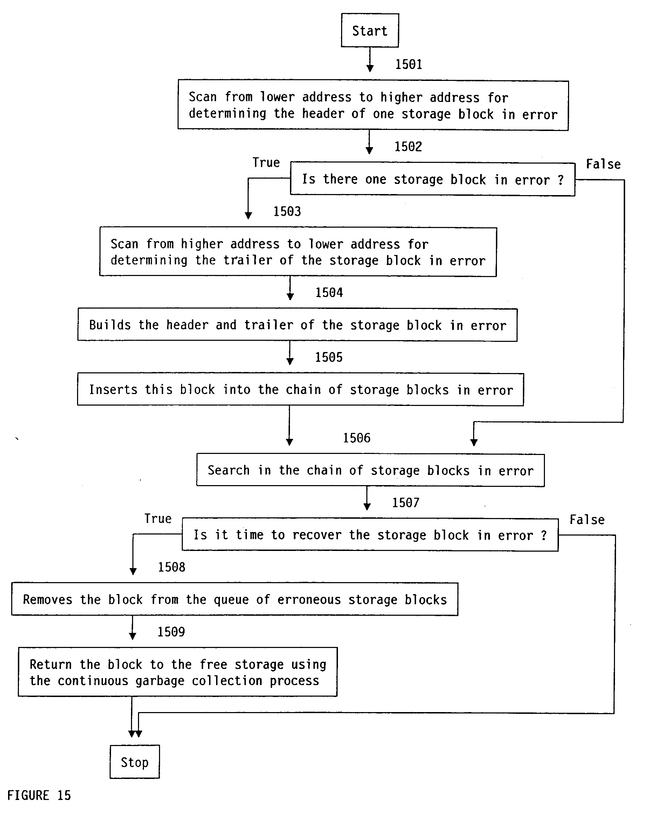

Figure 15 is a flowchart of the periodic Error Isolation and Recovery process to recover memory errors due to the loss of Memory Management Information. Normally, in absence of error, the working storage is composed of Working Storage Blocks in one of the two possible states : free or allocated. The Error Isolation and Recovery process validates the integrity of the Working Storage Blocks by periodically scanning the whole working storage.
- (1501) The scanning starts by the reading of the Header of the first Working Storage Block. The value of the Size (S) field determines both the Trailer of this Working Storage Block and the Header of the next block. The Trailer of this first Working Storage Block is used to validate the integrity of said block. The process continues in the same way using the Header of the second Working Storage Block until the end of working storage is reached or until a Working Storage Block is found in error.
- (1502) At each iteration, the Boundary Tags at both ends of the Working Storage Block must contain the same values. If a Header of a Working Storage Block is not consistent with its associated Trailer, then the process has found the beginning of a portion of the working memory in error. This loss of Memory Management Information suspends the normal process before it reaches the end of the working storage.
- (1503) When an error is found, by scanning the working storage in the reverse order from the end to the beginning, the process can determine the end of the portion in error. It occurs again when there is an inconsistency between the Trailer and the associated Header.
- (1504) The error isolation process can now take place by encapsulating the portion of memory designated in error by a new Header (including a Time Stamp field (T) and a Forward Pointer as illustrated in Figure 2 (213)) and new Trailer.
- (1505) The current time is written in the Time-Stamp (T) field and the Working Storage Block is chained in the tail of a queue comprising all the Working Storage Blocks in error.

The next stage consists in recovering the Working Storage Block in error. This recovery process comprises the steps of:
- (1506) searching a Working Storage Block at the beginning of the queue made up of Working Storage Blocks in error.
- (1507) comparing the Time-Stamp (T) value in the Header with the current time. The process determines whether said Working Storage Block must be recovered or not.
- (1508) removing said Working Storage Block from the the queue of Working Storage Blocks in error, and
- (1509) returning said Working Storage Block to the free working storage by means of the Continuous Garbage Collection process described above.

## Claims

1. A process for controlling memory in a data processing system including one or more processing units and a memory, said data processing system executing one or a plurality of tasks, each task issuing one or more requests for memory of specified size, wherein a portion of said memory is designated working storage, the process comprising the steps of:
• defining, at initialization time, at least one class of free working storage blocks comprised within a given predefined size range,
• determining, at initialization time, a minimum size value bellow which no class of working storage blocks is defined,
• determining, in response to a request from a task for a memory space of a specific size, a non empty class of free working storage blocks with a content greater or equal to said requested size,
• allocating, a free working storage block from said class to said task, said allocating step determining a working storage block address,
• releasing partially unused memory part of said allocated working storage block on request of said task,
• deallocating said allocated working storage block when this is no longer required by said task,
• queueing all free working storage blocks within the same class in a double linked list.

2. The process of Claim 1, wherein said step of allocating a working storage block to a task comprises the further steps of:
• removing one free working storage block from a non empty class (1107), said working storage block comprising a data part and memory management information, said data part being equal or greater than the requested size,
• dividing said free working storage block in two working storage blocks (1108),
• Allocating the working storage block of the requested size at lower address to said task (1111), and
• returning the other working storage block at upper address to the appropriate class of free working storage blocks (1110) or remaining it alone if its size does not reach said minimal pre-defined size.

3. The process of anyone of Claims 1 to 2, wherein said step of releasing partially an unused memory part of said allocated working storage block comprises the further steps of :
• dividing the allocated Working Storage Block in two working storage blocks (1204),
■ the one at the lower address remaining allocated (1205), and
■ the other at the upper address becoming a new free working storage block,
• collapsing said new free working storage block with the adjacent available free working storage block at upper address into one unique free working storage block,
• returning the free working storage block into the appropriate class of free working storage blocks (1206), or remaining it alone if its size does not reach said minimal pre-defined size.

4. The process of anyone of Claims 1 to 3, wherein said step of deallocating a previously allocated working storage block comprises the further steps of : steps of :
• determining if the adjacent working storage blocks at upper and lower addresses are free.
• collapsing said previously allocated working storage block with the adjacent free working storage blocks at upper and lower addresses into a unique free working storage block,
• returning said free working storage block into the appropriate class of free working storage blocks (1304), or remaining it alone if its size does not reach a minimal pre-defined size.

5. The process of anyone of Claims 1 to 4, including the further step of determining working storage blocks in error, designated as being in error working storage blocks with inconsistent memory management information, said step comprising the steps of :
• scanning in sequence all working storage blocks in memory from lower addresses to upper addresses for determining the beginning of a working storage block in error (1501).
• scanning in reverse order all working storage blocks in memory from upper addresses to lower addresses for determining the end of said working storage block in error (1503),
• designating as being in error said working storage block by updating its memory management information,
• associating to said working storage block in error the time of the error discovery,
• queuing said working storage block in error in an error queue.

6. The process of Claim 5, including the further step of recovering working storage blocks in error, said step comprising the steps of :
• scanning the error queue (1506),
• determining for each working storage block in error whether this must be recovered or not (1507) :
■ if yes, returning the working storage block to recover into the appropriate class of free working storage blocks (1509).
■ if not, keeping the working storage block in error in the error queue.

7. The process of anyone of Claims 1 to 6, wherein said memory management information in each working storage information comprises :
• a header (201) including :
■ a size field (S) (207) indicating the total length of said working storage block, header and trailer included,
■ a flag field (G) (204) defining the state of said working storage block, "allocated", "free" or "in error",
■ if said working storage blocks is free (212),
▲ a forward pointer (F) (208) indicating the next free working storage block in the list of free working storage blocks belonging to a same class, and
▲ a backward pointer (B) (209) indicating the preceding free working storage block in the list of free working storage blocks belonging to a same class,
■ if said working storage blocks is in error (213),
▲ a forward pointer (F), indicating the next working storage block in error, and
▲ a time-stamp field (T) (210) with the time of the error discovery,
• a trailer (203) comprising the same size field (S) and flag field (G) as in the header.

8. The process of Claim 7 wherein said step of collapsing two adjacent free working storage blocks in a new free working storage block comprises the step of updating :
• the size field (S) with the new resulting size, and
• the flag field (G) according to the new state,
of the new free working storage block.

9. The process of anyone of Claims 7 to 8, wherein said step of returning a free working storage block into the appropriate class of free working storage blocks comprises the step of :
• updating the backward pointer and forward pointer according to the address of the preceding and the next free working storage block in said class ((1110),(1203), (1304),(1407),(1509)).

10. The process of anyone of Claims 7 to 9, wherein said step of determining working storage blocks in error comprises the step of :
• checking whether size field (S) and flag field (F) are identical in the header and the trailer of each working storage block ((1501), (1503)), and
• designating as being in error working storage blocks with inconsistent size and flag fields in header and trailer.
